# EUROPEAN PATENT APPLICATION

(11) **EP 1 986 100 A1**
(43) Date of publication of application: **29.10.2008**
(21) Application number: 07702215.0
(22) Date of filing: 26.01.2007
(51) Int. Cl.: G06F 12/02

(54) **PASTE LINK PROCESSING METHOD AND PASTE LINK PROCESSOR BASED ON OBJECT MEMORY DATABASE**

(30) Priority: 26.01.2006 CN 200610030360
(71) Applicant: Wuxi Evermore Software, Inc, Wuxi City, Jiangsu Province 214028 (CN)
(72) Inventor: FENG, Jianpei, Wuxi, Jiangsu 214028 (CN)
(74) Representative: Price, Nigel John King
(86) International application number: PCT/CN2007/000310
(87) International publication number: WO 2007/087753

(57) **Abstract**

The present invention relates to a method and apparatus for processing a pasting link based on a data object oriented repository system (DOORS). The DOORS stores objects and link addresses of the objects, the link addresses of the objects records row numbers or column numbers of a spreadsheet, a group of storing addresses of the objects associating with each other are stored in the rows or columns of the spreadsheet, the storing addresses of the objects are addresses where the objects are stored in the DOORS, and the method comprises following steps when the objects are changed: (1) visiting the DOORS, and reading the link addresses of the objects; (2) visiting the rows or columns of the spreadsheet based on the row numbers or the column numbers recorded by the link addresses of the objects; and (3) perfonning content update of the objects in the DOORS based on change of content of the objects and/or address update of the objects in the rows or columns based on change of addresses of the objects. The apparatus for processing a pasting link includes a storing module, a guiding module, a locating module and an editing module. The present invention can update data automatically, speedily and accurately, which can ensure the synchronization and consistency of the data.

## Description

### FIELD OF THE TECHNOLOGY

The present invention relates to a method for processing a copying object and a pasting object which have a relationship of pasting link between the copying object and the pasting object and a corresponding processing apparatus, and particularly to a method and apparatus for processing a pasting link based on a data object oriented repository system (DOORS).

### BACKGROUND OF THE INVENTION

The method for processing a link of data object in a same application or between different applications of office software, taking Microsoft Office as an example, provides a technology of OLE (Object Linking and Embedding) and solves a problem of data link in the same application or between the different applications. However, such link technology of data object has some technical problems, for example, speed is low, the data object can not interact and update and so on. For example, when a data change occurring in an application leads to data update in another application, updating speed is made to be lower by the casual technology. Also, a word processing is linked to a cell C3 of a spreadsheet. When a column is inserted before the cell of the spreadsheet, the address of the cell C3 is changed to C4, but the word processing is still linked to the old address C3 rather than C4. It is like you notify a post office to change the address after moving, but the post office still sends your mail to your old address and sends the mail of the former tenant in the present address to you, which is obviously wrong. In addition to the lower speed, it is the main reason that users seldom use the technology of OLE.

An invention patent ZL01134154.8 Method for Linking between a data object oriented repository system and a cell of a spreadsheet provides a technical solution based on the DOORS, which uses cells of a spreadsheet to store data objects and all the cells constitute the DOORS. The data objects may be original simple data, address information of the data objects linked from other cells, or application software information of performing simple operation on the original simple data, or any combination of them. The invention patent provides a command of "pasting link" for pasting the data objects stored in copy cells to paste cells and building a link that the paste cells have the same data objects with the data objects stored in the copy cells and is corresponding to the field of the database.

In order to keep the link between the spreadsheet and database all the time, the invention patent sets a mark respectively in a row head array and a column head array of the spreadsheet, which records information that corresponding rows of the spreadsheet correspond to the corresponding record in the database and information that corresponding columns of the spreadsheet correspond to the corresponding record in the database. In other words, a mark is added into a row head array of the spreadsheet, the mark includes normal information about the row and is used to denote that the row includes a record from the database sheet; and a mark is also added into a column head array, which is used to denote that the column links a specific field in the database sheet.

### SUMMARY OF THE INVENTION

The first subject of the present invention for the technical problem that the speed of the link of the data objects is low and errors easily occur in the prior art is to provide a method for processing a pasting link based on a data object oriented repository system. The data objects between the different applications of the integrated office software can interact and update speedily and reliably via managing the storing addresses of the copying objects and the storing addresses of the pasting objects.

The second subject of the present invention is to provide an apparatus for processing a pasting link based on a data object oriented repository system, which can managing the storing addresses of the copying objects and the storing addresses of the pasting objects effectively.

In order to realize the first subject, the present invention provides a method for processing a pasting link based on a data object oriented repository system. The DOORS stores objects and link addresses of the objects, the link addresses of the objects records row numbers or column numbers of a spreadsheet, the rows or columns of the spreadsheet store a group of storing addresses of the objects associating with each other, the storing addresses of objects are addresses where the objects store in the DOORS, and when the objects are changed, the method includes:

step 10, visiting the DOORS, and reading the link addresses of the objects;

step 20, visiting the rows or columns of the spreadsheet based on the row numbers or the column numbers recorded by the link addresses of the objects; and

step 30, performing content update of the objects in the DOORS based on change of content of the objects and/or address update of the objects in the rows or columns based on change of addresses of the objects.

In the step 30, the content update of the objects includes content update of the pasting objects when the data and attributes of copying objects are changed, content update when the copying objects and the copying objects are deleted, and address update when the addresses of copying objects and the addresses of copying objects are changed.

In the above technical solution, the storing addresses of the copying objects and the storing addresses of the pasting objects are stored in the spreadsheet by executing a command of pasting link.

In order to realize the first subject, the present invention provides an apparatus for processing a pasting link based on a DOORS, includes:

a storing module adapted to store a group of storing addresses of objects associating with each other;

a guiding module connected with the storing module and the DOORS, respectively, and adapted to write the storing addresses of the objects in the storing module and write link addresses of the objects in the DOORS; wherein the link addresses of the objects are storing addresses where the storing addresses of objects are stored into the storing module;

a locating module connected with the storing module and the DOORS respectively, and adapted to locate positions of the objects in the DOORS and locate positions of the storing addresses of the objects in the storing module; and

an editing module connected with the storing module, the DOORS and the locating module respectively, and adapted to perform update on content of the objects and the storing addresses of the objects;

the objects comprise copying objects and pasting objects, and the storing addresses of the objects comprise storing addresses of the copying objects and storing addresses of the pasting objects.

the guiding module is adapted to generate the copying objects and the pasting objects and store the copying objects and the pasting objects into the DOORS, generate the storing addresses of the copying objects and the storing addresses of the pasting objects and store the storing addresses of the copying objects and the storing addresses of the pasting objects into the storing module, and generate the link addresses of the objects and store the link addresses of the objects into the DOORS

the locating module is adapted to visit the DOORS when the objects are changed, read link addresses of the objects, locate the storing addresses of the objects in the storing module based on the link addresses of the objects, and locate the objects in the DOORS based on the storing addresses of the objects.

the editing module is located by the locating module, and performs content update of the objects in the DOORS based on change of content of the objects and/or address update of the objects in the rows or columns based on change of address of the objects.

In the above technical solution, the storing module is constructed by a spreadsheet, the spreadsheet is constructed by at least one row or column, and any one of the rows and columns constructs cells of the spreadsheet by crossing with each other, each of the cells stores one and only one storing address of the copying objects or the storing address of the pasting objects, the storing addresses of the copying objects are stored into designated cells of the rows or columns, the storing addresses of the pasting objects are stored into blank cells of the same rows or columns. The designated cells are cells of a first column of the rows or cells of a first row of the columns.

The present invention provides the method and apparatus for processing a pasting link based on a DOORS. The data objects between the different applications of the integrated office software can interact and update speedily and reliably by constructing a spreadsheet, storing the storing addresses of the copying objects and the storing addresses of the pasting objects into the spreadsheet, and notifying the corresponding objects to adjust according to the change of the copying objects and the pasting objects.

In order to describe the applications using the objects in the DOORS, the present invention use the spreadsheet as the DOORS. The spreadsheet is established to describe and manage the storing addresses of the copying objects and the pasting objects of all the links. The advantages that the present invention uses the spreadsheet to manage the links are same with that of using the spreadsheet as the DOORS. On this basis, the software technology can update data automatically, speedily and accurately, the link relationship between the data objects can be sought speedily and the link relationship with each other can be added and canceled conveniently and accurately.

The method and apparatus for processing a pasting link based on a DOORS of the present invention can realize a correct link, response time is also short, and more important is that synchronization and consistency of the data can be ensured. The technical solutions of the present invention denote that the applications can be used widely only if the reliable technology and the correct resolving solution are used.

The present invention will be described in more detail with reference to the drawings and embodiments.

### BRIEF DESCRIPTION OF THE DRAWINGS

Figure is the flow chart of a method for processing a pasting link based on a DOORS of the present invention;

Figure 2 is the flow chart of the content update when data and attributes of copying objects are changed of the present invention;

Figure 3 is the flow chart of the content update when copying objects are deleted;

Figure 4 is the flow chart of the content update when the pasting objects are deleted of the present invention;

Figure 5 is the flow chart of address update when addresses of the copying objects are changed of the present invention;

Figure 6 is the flow chart of address update when addresses of the pasting objects are changed;

Figure 7 is the flow chart of executing the command of pasting link;

Figure 8 is the schematic view of the spreadsheet of the present invention;

Figure 9 is the specific embodiment of executing the command of pasting link of the present invention;

Figure 10 is the specific embodiment of the content update when data of the copying objects are changed of the present invention;

Figure 11 is the schematic view of an apparatus for processing a pasting link based on a DOORS.

### DETAILED DESCRIPTION OF THE PREFERRED EMBODIMENTS

The present invention is a development of the patent for invention ZL01134154.8 Method for Linking between a data object oriented repository system and a cell of a spreadsheet. The DOORS in the present invention stores the data objects by using cells of the spreadsheet, and all the cells construct the DOORS. Specifically, the DOORS provides a manner of storing objects like a two-dimension sheet. The cell is only designated via a sheet number, a row number and a column number in the two-dimension sheet, and the objects are set into the cells. The storing addresses of the objects in the DOORS are addresses of the cells where the objects are stored in the spreadsheet. For example, the character paragraph "patent" is set into the cell B3 of the spreadsheet as a character object of the DOORS, and the address of the word object is B3 (column B, row 3). In following description of the present invention, storing addresses of the objects are used in unison to describe positions of the objects in the DOORS. In fact, the storing addresses of the objects exactly are addresses of the cells where the objects are stored in the spreadsheet. The spreadsheet described in the technical solution of the present invention all denotes the spreadsheet being used to store the storing addresses of the objects.

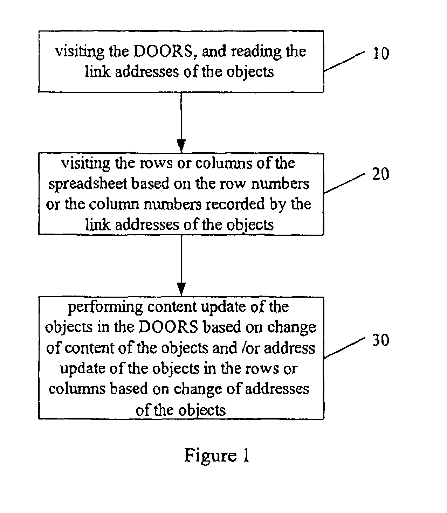

Figure 1 is the flow chart of a method for processing a pasting link based on a DOORS of the present invention. The DOORS stores objects and link addresses of the objects, the link addresses of the objects records row numbers or column numbers of a spreadsheet, the rows or columns of the spreadsheet store a group of storing addresses of objects associating with each other, and the storing addresses of objects are addresses where the objects are stored in the DOORS. When the objects are changed, the following steps are executed:

step 10, visiting the DOORS, and reading the link addresses of the objects;

step 20, visiting the rows or columns of the spreadsheet based on the row numbers or the column numbers recorded by the link addresses of the objects; and

step 30, performing content update of the objects in the DOORS based on change of content of the objects and/or address update of the objects in the rows or columns based on change of addresses of the objects.

The present invention uses the spreadsheet to manage the link relationship between the copying objects and the pasting objects. The copying objects and the pasting objects are stored in the DOORS. The storing positions of the copying objects and the pasting objects in the DOORS are the storing addresses of the copying objects and the storing addresses of the pasting objects, which are stored in the same rows or the same columns of the spreadsheet. The row numbers of the rows or the column numbers of the columns are stored in the DOORS as link addresses of the objects and are corresponding to the copying objects and the pasting objects. The present invention processes all kinds of update job needing to be performed when the copying objects or the pasting objects are changed via linking addresses of the objects in the DOORS and the storing addresses of the copying objects and the storing addresses of the pasting objects in the spreadsheet. When the copying objects or the pasting objects are changed, the link addresses of the objects corresponding to the copying objects or the pasting objects having changed are located by visiting the DOORS, the corresponding rows or columns recording the storing addresses of the copying objects and the storing addresses of the pasting objects in the spreadsheet are obtained after reading, and the rows or columns are visited to perform corresponding updating operation.

The above change includes two major categories: change of content of the objects and change of addresses of the objects. The change of the content of the objects includes change of the data and attributes of the copying objects, deleting of the copying objects and deleting of the pasting objects. The change of the addresses of the objects includes change of addresses of the copying objects and change of addresses of the pasting objects. The present invention can perform corresponding updating aiming at the above changes, which are described respectively below.

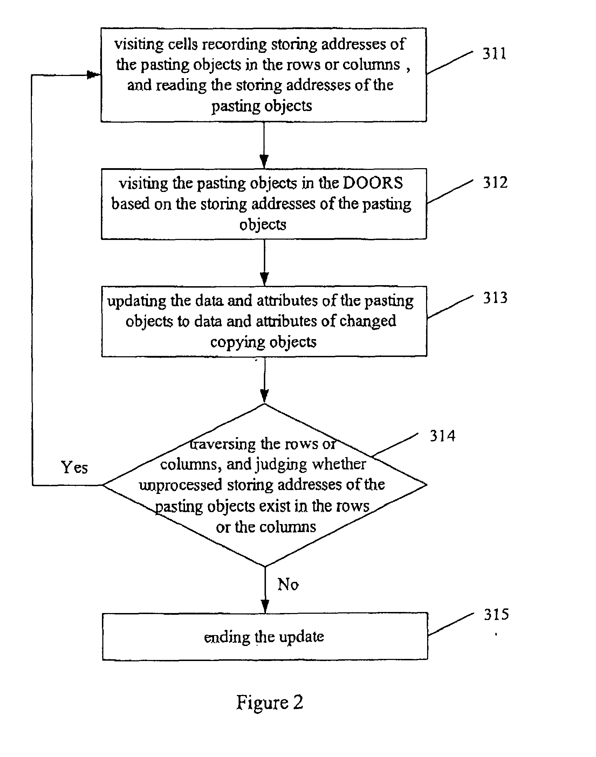

Figure 2 is the flow chart of the content update when data and attributes of copying objects are changed of the present invention, which specifically is:

step 311, visiting cells recording storing addresses of the pasting objects in the rows or columns, and reading the storing addresses of the pasting objects;

step 312, visiting the pasting objects in the DOORS based on the storing addresses of the pasting objects;

step 313, updating the data and attributes of the pasting objects to data and attributes of changed copying objects ; and

step 314, traversing the rows or columns, and judging whether unprocessed storing addresses of the pasting objects exist in the rows or the columns or not; executing the step 311 if the unprocessed storing addresses of the pasting objects exist in the rows or the columns, and executing step 315 if the unprocessed storing addresses of the pasting objects do not exist in the rows or the columns;

step 315, ending the update.

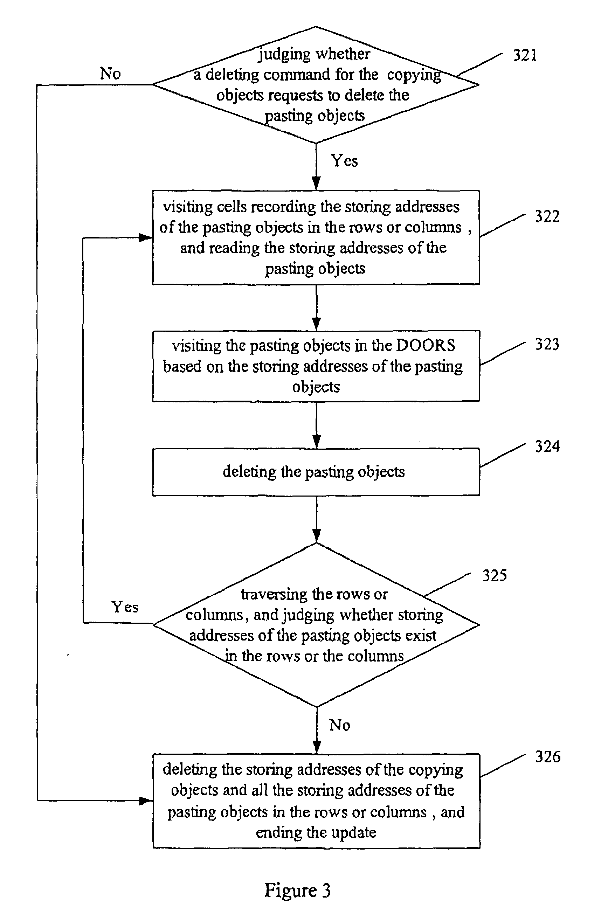

Figure 3 is the flow chart of the content update when copying objects are deleted, which specifically is:

step 321, judging whether a deleting command for the copying objects requests to delete the pasting objects or not; executing step 322 if the deleting command for the copying objects requests to delete the pasting objects, and executing step 326 if the deleting command for the copying objects does not request to delete the pasting objects;

step 322, visiting cells recording the storing addresses of the pasting objects in the rows or columns, and reading the storing addresses of the pasting objects;

step 323, visiting the pasting objects in the DOORS based on the storing addresses of the pasting objects;

step 324, deleting the pasting objects;

step 325, traversing the rows or columns, and judging whether unprocessed storing addresses of the pasting objects exist in the rows or the columns or not; executing the step 322 if the unprocessed storing addresses of the pasting objects exist in the rows or the columns, and executing step 326 if the unprocessed storing addresses of the pasting objects do not exist in the rows or the columns; and

step 326, deleting the storing addresses of the copying objects and all the storing addresses of the pasting objects in the rows or columns, and ending the update.

In the technical solution shown in the Figure 3, the flow that the pasting objects are not deleted when the copying objects are deleted equal to that the link relationship between the pasting objects and the copying objects are disconnected. In fact, the deleting of the storing addresses of the pasting objects or the copying objects both means the disconnection of the link relationship.

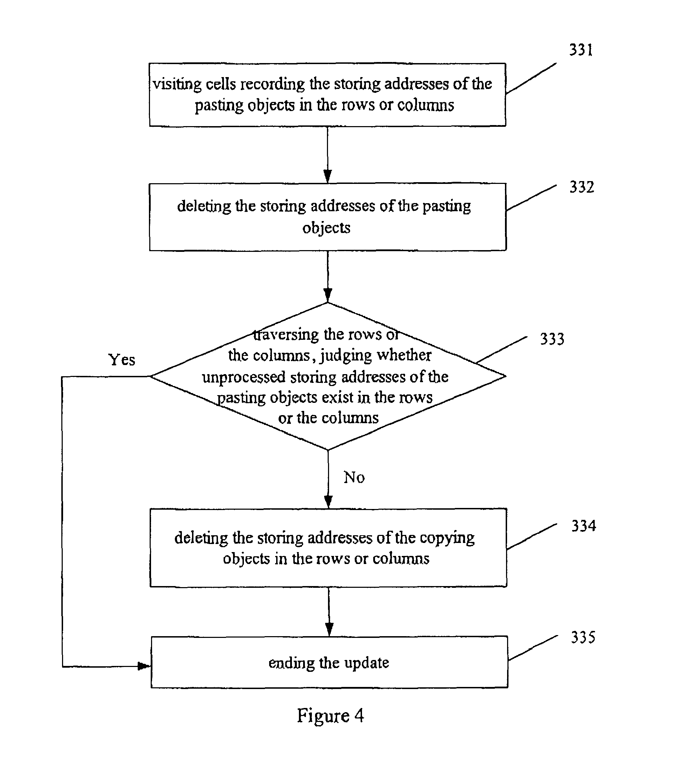

Figure 4 is the flow chart of the content update when the pasting objects are deleted of the present invention, which specifically is:

step 331, visiting cells recording the storing addresses of the pasting objects in the rows or columns;

step 332, deleting the storing addresses of the pasting objects;

step 333, traversing the rows or the columns, and judging whether unprocessed storing addresses of the pasting objects exist in the rows or the columns or not; executing step 335 if the unprocessed storing addresses of the pasting objects exist in the rows or the columns, executing step 334 if the unprocessed storing addresses of the pasting objects do not exist in the rows or the columns;

step 334, deleting the storing addresses of the copying objects in the rows or columns, and executing step 335; and

step 335, ending the update.

The purpose of the step 333 is to examine whether only one storing address of the pasting object exists in the row or column. If the only one storing address of the pasting object is deleted, the link relationship between the pasting objects and the copying objects is equal to be disconnected and storing addresses of the copying objects have no signification, thus the storing addresses of the copying objects may also be deleted. If the storing addresses of the pasting objects exist in the row or column, the copying object have the link relationship with several pasting objects and the storing addresses of the copying objects should not be deleted.

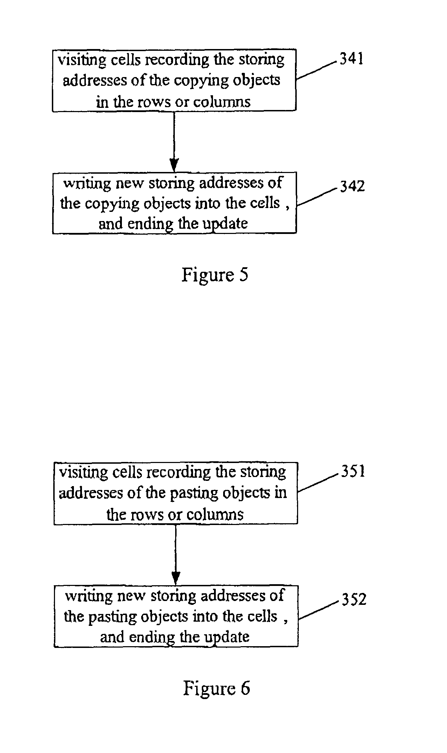

Figure 5 is the flow chart of address update when addresses of the copying objects are changed of the present invention, which specifically is:

step 341, visiting cells recording the storing addresses of the copying objects in the rows or columns; and

step 342, writing new storing addresses of the copying objects into the cells, and ending the update.

Figure 6 is the flow chart of address update when addresses of the pasting objects are changed, which specifically is:

step 351, visiting cells recording the storing addresses of the pasting objects in the rows or columns; and

step 352, writing new storing addresses of the pasting objects into the cells, and ending the update.

The flows of updating addresses shown in the Figure 5 and Figure 6 make the address information point to the new addresses of the pasting objects and the copying objects all the time because the address information in the spreadsheet is modified, which ensures the fast and accurate link of the present invention.

The technical solutions shown in the figures 2 to 6 may realize the fast and reliable interaction and update between the pasting objects and the copying objects by managing the storing addresses of the pasting objects and the storing addresses of the copying objects stored in the spreadsheet.

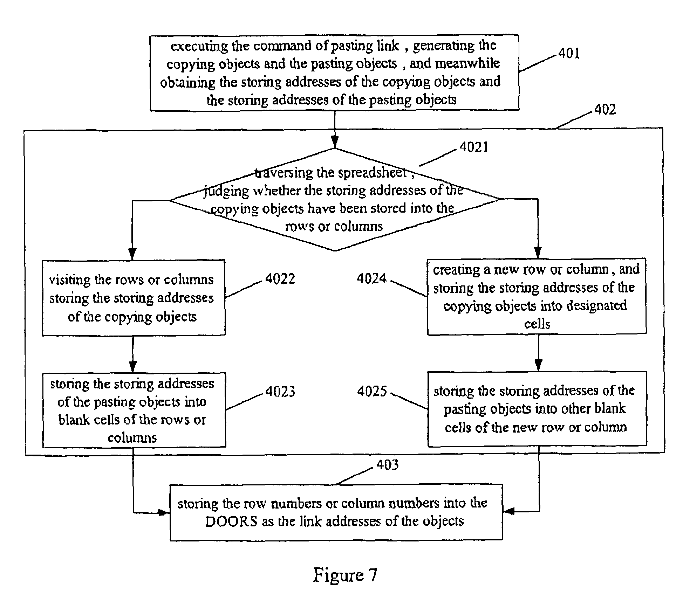

Figure 7 is the flow chart of executing the command of pasting link. In the above technical solutions of the present solution, the storing addresses of the copying objects and the storing addresses of the pasting objects are stored in the spreadsheet by executing a command of pasting link, the link addresses of the objects are also stored in the DOORS by executing a command of pasting link, and specifically is:

step 401, executing the command of pasting link, generating the copying objects and the pasting objects, and meanwhile obtaining the storing addresses of the copying objects and the storing addresses of the pasting objects;

step 402, storing the storing addresses of the copying objects and the storing addresses of the pasting objects into the same rows or columns of the spreadsheet; and

step 403, storing the row numbers or column numbers into the DOORS as the link addresses of the objects.

The step 402 specifically is:

step 4021, traversing the spreadsheet, judging whether the storing addresses of the copying objects have been stored into the rows or columns or not; executing step 4022 if the storing addresses of the copying objects have been stored into the rows or columns, and executing step 4024 if the storing addresses of the copying objects have not been stored into the rows or columns;

step 4022, visiting the rows or columns storing the storing addresses of the copying objects;

step 4023, storing the storing addresses of the pasting objects into blank cells of the rows or columns, and executing the step 403;

step 4024, creating a new row or column in the spreadsheet, and storing the storing addresses of the copying objects into designated cells of the new row or column; and

step 4025, storing the storing addresses of the pasting objects into other blank cells of the new row or column, and executing the step 403.

The steps 4021 to 4023 of the technical solutions shown in the figure 7 mainly aim at the situation that the command of pasting link is executed for several times or the copy objects have been in the cells of the spreadsheet. The link being pasted several times to different places is only adding a storing address of the pasting object in the row or column where the storing addresses of the pasting objects locate because only one of the storing addresses of the pasting objects is stored in the cell of the spreadsheet.

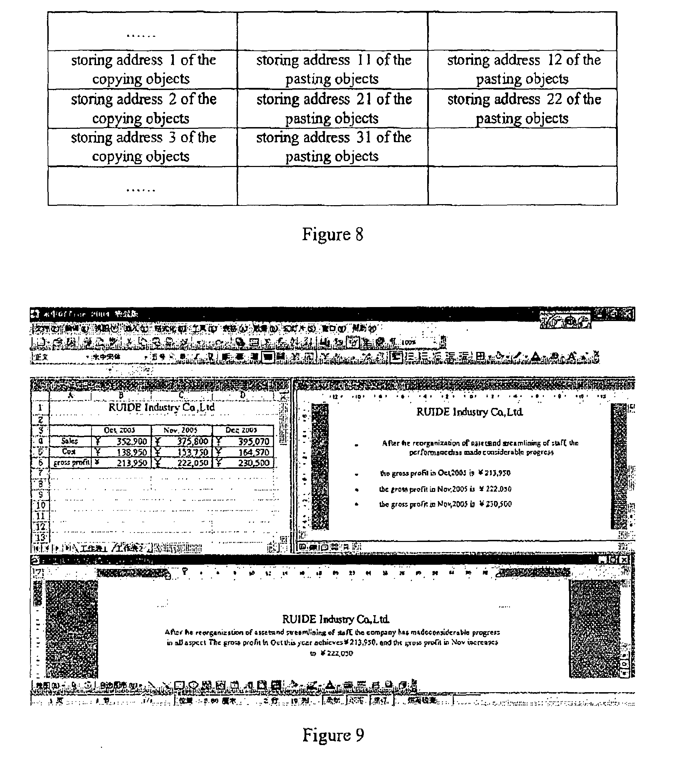

Figure 8 is the schematic view of the spreadsheet of the present invention. The spreadsheet is constructed by one or more rows or columns, and any one of the rows and any one of the columns cross with each other to construct cells of the spreadsheet; each of the cells stores only one storing address of the copying objects or only one storing address of the pasting objects; the storing addresses of the copying objects are stored into designated cells of the rows or columns of the spreadsheet, and the storing addresses of the pasting objects are stored into blank cells of the same rows or columns. The present embodiment uses the rows of the spreadsheet to store a group of storing addresses of the objects associating with each other. The designated cells are cells of the first column of the rows or cells of the first row of the columns. As shown in the Figure 8, the first column denotes the storing addresses of all the copying objects, for example the storing address 1 of the copying objects points to the storing position of the copying object in the DOORS and the cells of the columns behind the rows where the storing addresses of the copying objects locate denote the storing addresses of the pasting objects, for example the storing address 11 of the pasting objects points to the storing positions of the pasting objects in the DOORS.

Figure 9 is the specific embodiment of executing the command of pasting link of the present invention. As shown in the Figure 9, there are three applications in the YongZhong Office: sheet processing application, word processing application and manuscript demonstrating application. The three applications are integrated in a DOORS. When the data objects in the sheet processing application are pasted link into the word processing application and the manuscript demonstrating application, specific operation is :

(1) copying a cell B6 in the sheet processing application;

(2) executing the command of pasting link on the designated position in the word processing application;

(3) generating the copying objects, the pasting objects, the storing addresses of the copying objects and the storing addresses of the pasting objects;

(4) the storing address 1 of the copying objects and the storing address 11 of the pasting objects are stored in the spreadsheet shown in the Figure 8, the storing address 1 of the copying objects is stored in the column 1, and the storing address 11 of the pasting objects is stored in the column 2;

(5) the row numbers where the storing address 1 of the copying objects and the storing address 11 of the pasting objects locate are stored in the DOORS as link addresses of the objects;

(6) the sheet processing application stores the copying objects and the copying objects are corresponding to the link addresses of the objects. In other words, the copying objects corresponds to the row numbers where the storing address 1 of the copying objects is stored in the spreadsheet;

(7) the word processing application saves the pasting objects and the pasting objects correspond to the link addresses of the objects. In other words, the pasting objects correspond to the row numbers where the storing address 11 of the pasting objects is stored in the spreadsheet;

(8) repeat the steps (1) to (7) and the two cells C6 and D6 are pasted link into the word processing application respectively;

(9) repeat the steps (1) to (8) and the three cells B6, C6 and D6 are pasted link into the manuscript demonstrating application respectively.

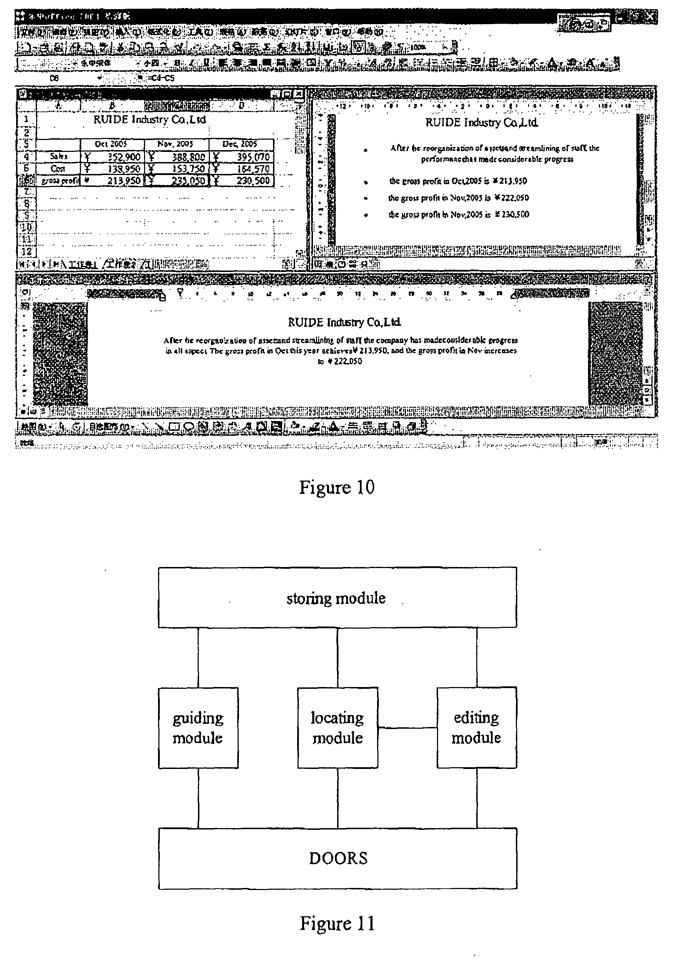

Figure 10 is the specific embodiment of the content update when data of the copying objects are changed of the present invention. As shown in the Figure 10, the sheet processing application performs a recalculation of the formula and the data (gross profit in Nov, 2005) in the cell C6 are modified after the data (sales in Nov, 2005) in the cell C4 being modified. The change of the data in the cell C6 will make the pasting object in the word processing application and the manuscript demonstrating application be updated accordingly because the cell C6 is the copying object, which specifically is:

(A) the storing address 21 of the pasting objects (point to the gross profit in Nov in the word processing application) and the storing address 22 of the pasting objects (point to the gross profit in Nov in the manuscript demonstrating application) citing the pasting objects are found according to the link addresses of the objects recorded in the DOORS, which are row numbers in the spreadsheet;

(B) the copying objects pointed by the storing address 2 of the copying objects are transmitted to the pasting objects according to the pasting objects pointed by the storing address 21 of the pasting objects and the storing address 22 of the pasting objects;

(C) the pasting objects perform the data update according to the copying objects data transmitted in(gross profit in Nov in the word processing application and the manuscript demonstrating application are updated).

It can be seen from the above technical solution that the situation of link error does not occur by using the spreadsheet to store the storing addresses of the copying objects and the storing addresses of the pasting objects and establishing the structure of data link relationship. For example, the change of the addresses after executing the command of inserting or deleting the area of rows and columns in the sheet processing application only need to adjust the addresses pointing to the copying objects or the pasting objects in the spreadsheet shown in the Figure 8. And the adjustment of addresses can be finished via the interrelation of the address reference of the spreadsheet, which does not need to maintain the link relationship between the data additionally and particularly resolves the link relationship of the data among different applications.

Figure 11 is the schematic view of an apparatus for processing a pasting link based on a DOORS. The apparatus for processing a pasting link includes a storing module, a guiding module, a locating module and an editing module. The guiding module, the locating module and the editing module connect with the storing module and the DOORS respectively. The editing module also connects with the locating module.

The storing module of the present invention is adapted to store a group of storing addresses of objects associating with each other. Specifically, the storing module is constructed by a spreadsheet shown in the Figure 8, the spreadsheet is constructed by at least one row or column, and any one of the rows and any one of the columns cross with each other to construct cells of the spreadsheet, and each of the cells stores one and only one storing address of the copying objects or only one storing address of the pasting objects; the storing addresses of the copying objects are stored into designated cells of the rows or columns, and the storing addresses of the pasting objects are stored into blank cells of the same rows or columns. As shown in the figure 8, the designated cells are the cells of the first column in the rows.

The guiding module of the present invention is adapted to generate the copying objects and the pasting objects and store the copying objects and the pasting objects into the DOORS, generate the storing addresses of the copying objects and the storing addresses of the pasting objects and store the storing addresses of the copying objects and the storing addresses of the pasting objects into the storing module, and generate link addresses of the objects and store link addresses of the objects into the DOORS.

The locating module of the present invention is adapted to visit the DOORS when the objects are changed, read link addresses of the objects, locate storing addresses of the objects in the storing module based on the link addresses of the objects, and locate the objects in the DOORS based on the storing addresses of the objects.

The editing module is connected with the locating module and is located by the locating module, and is adapted to perform content update of the objects in the DOORS when the content of the objects is changed, and perform address update of the objects in the rows or columns when the addresses of the objects are changed.

The apparatus for processing a pasting link based on a data object oriented repository system of the present invention manages the addresses objects in the spreadsheet and the data objects in each application and is responsible for generating, updating, deleting or adjusting these objects. The apparatus for processing a pasting link includes a data structure part and a function part. The data structure part includes the spreadsheet for storing the storing addresses of the copying objects and the storing addresses of the pasting objects. The function part is the functional modules for managing the data structure, which includes the operation of generating the copying objects, the pasting objects and addresses objects, and setting the objects into each application and the spreadsheet when the command of copying and pasting link is executed, the update of the pasting objects when the data and the attributes of the copying objects are changed, the modification of the storing addresses of the copying objects stored in the spreadsheet when the addresses of the copying objects are changed, the deleting of the pasting objects when the copying objects are deleted, the modification of the pasting addresses of the copying objects stored in the spreadsheet when the addresses of the pasting objects are changed, the arrangement of the corresponding copying objects citing the pasting objects when the addresses of the pasting objects are changed. The above process that the functional modules perform effective management on the storing addresses of the copying objects and the storing addresses of the pasting objects is described in detail in the technical solutions shown in the figures 2 to 6, which is not describe again here.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention and covered in the claims of the present invention.

## Claims

1. A method for processing a pasting link based on a data object oriented repository system ( DOORS ) , wherein the DOORS stores objects and link addresses of the objects, the link addresses of the objects records row numbers or column numbers of a spreadsheet, a group of storing addresses of the objects associating with each other are stored in the rows or columns of the spreadsheet, the storing addresses of the objects are addresses where the objects are stored in the DOORS, and the method comprises following steps when the objects are changed:
step 10, visiting the DOORS, and reading the link addresses of the objects;
step 20, visiting the rows or columns of the spreadsheet based on the row numbers or the column numbers recorded by the link addresses of the objects; and
step 30, performing content update of the objects in the DOORS based on change of content of the objects and/or address update of the objects in the rows or columns based on change of addresses of the objects.

2. The method according to claim 1, wherein in the step 30, the content update of the objects is content update of pasting objects when data and attributes of copying objects are changed, which specifically comprises:
step 311, visiting cells recording storing addresses of the pasting objects in the rows or columns, and reading the storing addresses of the pasting objects;
step 312, visiting the pasting objects in the DOORS based on the storing addresses of the pasting objects;
step 313, updating the data and attributes of the pasting objects to data and attributes of changed copying objects ; and
step 314, traversing the rows or columns, and judging whether unprocessed storing addresses of the pasting objects exist in the rows or the columns or not; executing the step 311 if the unprocessed storing addresses of the pasting objects exist in the rows or the columns, and executing step 315 if the unprocessed storing addresses of the pasting objects do not exist in the rows or the columns;
step 315, ending the update.

3. The method according to claim 1, wherein in the step 30, the content update of the objects is content update when copying objects are deleted, which specifically comprises:
step 321, judging whether a deleting command for the copying objects requests to delete the pasting objects or not; executing step 322 if the deleting command for the copying objects requests to delete the pasting objects, and executing step 326 if the deleting command for the copying objects does not request to delete the pasting objects;
step 322, visiting cells recording the storing addresses of the pasting objects in the rows or columns, and reading the storing addresses of the pasting objects;
step 323, visiting the pasting objects in the DOORS based on the storing addresses of the pasting objects;
step 324, deleting the pasting objects;
step 325, traversing the rows or columns, and judging whether unprocessed storing addresses of the pasting objects exist in the rows or the columns or not; executing the step 322 if the unprocessed storing addresses of the pasting objects exist in the rows or the columns, and executing step 326 if the unprocessed storing addresses of the pasting objects do not exist in the rows or the columns; and
step 326, deleting the storing addresses of the copying objects and all the storing addresses of the pasting objects in the rows or columns, and ending the update.

4. The method according to claim 1, wherein in the step 30, the content update of the objects is content update when the pasting objects are deleted, which specifically comprises:
step 331, visiting cells recording the storing addresses of the pasting objects in the rows or columns;
step 332, deleting the storing addresses of the pasting objects;
step 333, traversing the rows or the columns, and judging whether unprocessed storing addresses of the pasting objects exist in the rows or the columns or not; executing step 335 if the unprocessed storing addresses of the pasting objects exist in the rows or the columns, executing step 334 if the unprocessed storing addresses of the pasting objects do not exist in the rows or the columns;
step 334, deleting the storing addresses of the copying objects in the rows or columns, and executing step 335; and
step 335, ending the update.

5. The method according to claim 1, wherein in the step 30, the address update of the objects is address update of the storing addresses of copying objects when addresses of the copying objects are changed, which specifically comprises:
step 341, visiting cells recording the storing addresses of the copying objects in the rows or columns; and
step 342, writing new storing addresses of the copying objects into the cells, and ending the update.

6. The method according to claim 1, wherein in the step 30, the address update of the objects is address update of the storing addresses of pasting objects when addresses of the pasting objects are changed, which specifically comprises:
step 351, visiting cells recording the storing addresses of the pasting objects in the rows or columns; and
step 352, writing new storing addresses of the pasting objects into the cells, and ending the update.

7. The method according to any one of claims 1 to 6, wherein the storing addresses of the copying objects and the storing addresses of the pasting objects are stored in the spreadsheet by executing a command of pasting link, which specifically comprise:
step 401, executing the command of pasting link, generating the copying objects and the pasting objects, and meanwhile obtaining the storing addresses of the copying objects and the storing addresses of the pasting objects;
step 402, storing the storing addresses of the copying objects and the storing addresses of the pasting objects into the same rows or columns of the spreadsheet; and
step 403, storing the row numbers or column numbers into the DOORS as the link addresses of the objects.

8. The method according to claim 7, wherein the step 402 specifically comprises:
step 4021, traversing the spreadsheet, judging whether the storing addresses of the copying objects have been stored into the rows or columns or not; executing step 4022 if the storing addresses of the copying objects have been stored into the rows or columns, and executing step 4024 if the storing addresses of the copying objects have not been stored into the rows or columns;
step 4022, visiting the rows or columns storing the storing addresses of the copying objects;
step 4023, storing the storing addresses of the pasting objects into blank cells of the rows or columns, and executing the step 403;
step 4024, creating a new row or column in the spreadsheet, and storing the storing addresses of the copying objects into designated cells of the new row or column; and
step 4025, storing the storing addresses of the pasting objects into other blank cells of the new row or column, and executing the step 403.

9. The method according to claim 8, wherein the step 4024 specifically comprises:
creating a new row or column in the spreadsheet, and storing the storing addresses of the copying objects into the cell of a first column of the new row or the cell of a first row of the new column.

10. An apparatus for processing a pasting link based on a data object oriented repository system (DOORS), comprising:
a storing module adapted to store a group of storing addresses of objects associating with each other;
a guiding module connected with the storing module and the DOORS, respectively, and adapted to write the storing addresses of the objects in the storing module and write link addresses of the objects in the DOORS; wherein the link addresses of the objects are storing addresses where the storing addresses of objects are stored into the storing module;
a locating module connected with the storing module and the DOORS respectively, and adapted to locate positions of the objects in the DOORS and locate positions of the storing addresses of the objects in the storing module; and
an editing module connected with the storing module, the DOORS and the locating module respectively, and adapted to perform update on content of the objects and the storing addresses of the objects;
wherein the objects comprise copying objects and pasting objects, and the storing addresses of the objects comprise storing addresses of the copying objects and storing addresses of the pasting objects.

11. The apparatus according to claim 10, wherein the guiding module is adapted to generate the copying objects and the pasting objects and store the copying objects and the pasting objects into the DOORS, generate the storing addresses of the copying objects and the storing addresses of the pasting objects and store the storing addresses of the copying objects and the storing addresses of the pasting objects into the storing module, and generate the link addresses of the objects and store the link addresses of the objects into the DOORS.

12. The apparatus according to claim 10, wherein the locating module is adapted to visit the DOORS when the objects are changed, read link addresses of the objects, locate the storing addresses of the objects in the storing module based on the link addresses of the objects, and locate the objects in the DOORS based on the storing addresses of the objects.

13. The apparatus according to claim 10, wherein the editing module is located by the locating module, and performs content update of the objects in the DOORS based on change of content of the objects and/or address update of the objects in the rows or columns based on change of address of the objects.

14. The apparatus according to any one of claims 10 to 13, wherein the storing module is constructed by a spreadsheet, the spreadsheet is constructed by one or more rows or columns, and any one of the rows and any one of the columns cross with each other to construct cells of the spreadsheet; each of the cells stores only one storing address of the copying objects or only one storing address of the pasting objects; the storing addresses of the copying objects are stored into designated cells of the rows or columns of the spreadsheet, and the storing addresses of the pasting objects are stored into blank cells of the same rows or columns.

15. The apparatus according to claim 14, wherein the designated cells are cells of a first column of the rows or cells of a first row of the columns.
